# EUROPEAN PATENT SPECIFICATION

(11) **EP 1 659 374 B1**
(45) Date of publication and mention of the grant of the patent: **21.11.2007**
(21) Application number: 05110531.0
(22) Date of filing: 09.11.2005
(51) Int. Cl.: G01D 5/48, B60C 23/04, G01D 18/00, G01D 3/02

(54) **Centralized calibration coefficients for sensor based measurements.**
Zentralisierte Kalibrationskoeffizienten für sensorbasierte Messungen
Coefficients d'étalonnage centralisés pour mesures à base de capteur

(30) Priority: 12.11.2004 US 986709
(43) Date of publication of application: 24.05.2006
(73) Proprietor: Société de Technologie Michelin, 63000 Clermont-Ferrand (FR); Michelin Recherche et Technique S.A., 1763 Granges-Paccot (CH)
(72) Inventor: THIESEN, Jack, EASLEY S 29642 (US)
(74) Representative: Lasson, Cédric Y. M.

(56) References cited:
- US-A1- 2002 177 970
- US-B1- 6 272 446
- ROGER ALLAN: "Industry-Aligning Standards Boost Sensor Networking"[Online] 3 March 2003 (2003-03-03), XP002364058 Retrieved from the Internet: URL:http://www.elecdesign.com/Articles/Pri nt.cfm?ArticleID=3041> [retrieved on 2006-01-23]

## Description

### FIELD OF THE INVENTION

The present invention generally concerns interrogators for use with electronics assemblies that transmit information related to identification variables and/or measurements of selected physical or environmental conditions. More particularly, the subject calibration methodology utilizes a centralized database to supply individual sensor calibration constants for use with onsite measurements.

### BACKGROUND OF THE INVENTION

The incorporation of electronic devices with pneumatic tire and wheel structures yields many practical advantages. Tire electronics may include sensors and other components for relaying tire identification parameters and also for obtaining information regarding various physical parameters of a tire, such as temperature, pressure, tread wear, number of tire revolutions, vehicle speed, etc. Such performance information may become useful in tire monitoring and warning systems, and may even potentially be employed with feedback systems to regulate proper tire parameters.

Yet another potential capability offered by electronics systems integrated with tire structures corresponds to asset tracking and performance characterization for commercial vehicular applications. Commercial truck fleets, aviation craft and earth mover/mining vehicles are all viable industries that could utilize the benefits of tire electronic systems and related information transmission. Radio frequency identification (RFID) tags can be utilized to provide unique identification for a given tire, enabling tracking abilities for a tire. Tire sensors can determine the distance each tire in a vehicle has traveled and thus aid in maintenance planning for such commercial systems. Vehicle location and performance can be optimized for more expensive applications such as those concerning earth-mining equipment.

One particular type of sensor, or condition-responsive device, that has recently become desirable for use in certain tire electronics systems to determine various parameters related to a tire or wheel assembly is an acoustic wave device, such as a surface acoustic wave (SAW) device. SAW devices have desirable properties for certain sensor applications since they are sensitive, use very little power, and can be operated at RF frequencies convenient for relaying information in a wireless fashion. SAW devices may include at least one resonator element made up of interdigitated electrodes deposited on a piezoelectric substrate.

When an electrical input signal is applied to a SAW device, selected electrodes cause the SAW to act as a transducer, thus converting the input signal to a mechanical wave in the substrate. Other structures in the SAW reflect the mechanical wave and generate an electrical output signal. In this way, the SAW acts like an electromechanical resonator. A change in the output signal from a SAW device, such as a change in frequency, phase and/or amplitude of the output signal, corresponds to changing characteristics in the propagation path of the SAW device. In some SAW device embodiments, monitored device frequency and any changes thereto provide sufficient information to determine parameters such as temperature, and strain to which a SAW device is subjected. However, this sensor as is true with many sensors, requires calibration coefficients to be present to reduce the measured frequency changes into real-world physical data. In the case of the SAW devices these calibration coefficients are not located on the SAW devices themselves, but rather are located in an external data container, for example an RFID. In this case the RFID transponder is co-located in a sensor patch and is interrogated using and RF link and the requisite calibration coefficients are transferred to the interrogator so that the measured frequencies can be transformed into accurate temperature and pressure readings.

Additional background information regarding other uses of RFID technology and SAW devices may be had by reference to co-pending, commonly owned U.S. Patent Application Serial Number 10/697,576, filed 10/30/03, entitled "Acoustic Wave Device With Digital Data Transmission Functionality" incorporated herein for all purposes.

In conventional implementations of SAW devices in tire-related applications, SAW sensors transmit information about the parameters being sensed. However, it is often the case that, in any sensor measurement system, accurate measurements may require some form of calibration to account for manufacturing tolerances and other variables that may have an undesirable impact on absolute uniformity of readings from any group of sensors when exposed to exactly the same operating conditions.

Methods of dealing with such problems are known. For example, US-A-2002/0177970 discloses how calibration data may be downloaded from the Internet according to the unique ID of a sensor. In US-B1-6272446, a computer is connected to a series of transducers; calibration data for each transducer is downloaded to the transducer interface after the nature of each transducer has been determined. US-B1-6271748 describes a tire (pressure) sensor which transmits its unique ID to a remote reader. The sensor is also capable of carrying out calibration routine.

While various implementations of acoustic wave devices such as SAW sensors in tire electronic systems have been developed, and while various combinations of information have been wirelessly relayed from a tire or wheel assembly using conventional technologies, no design has emerged that generally encompasses all of the desired characteristics as hereafter presented in accordance with the subject technology.

### SUMMARY OF THE INVENTION

In view of the recognized features encountered in the prior art and addressed by the present subject matter, an improved methodology for obtaining calibration information for interrogators for use with SAW based devices has been developed. It should be noted that although the remainder of the present disclosure may refer to the use of SAW based devices as being integrated with a tire or wheel structure, neither such use nor such particular type device is a limitation of the present technology as, in fact, such devices, whether SAW based or not, may be used in combination with a variety of other devices or elements or even as stand alone environmental sensors. Moreover, the present technology may be used in combination with any sensor or, for that matter, other device types that are associated with some form of individual calibration.

In an exemplary configuration, SAW based devices may include an acoustic wave device connected as a feedback element in an oscillator/amplifier and may be further coupled to an antenna element, thus forming an active transmitter arrangement. The acoustic wave device determines the carrier frequency (or frequencies) produced by such an active transmitter, and therefore, the frequency (or frequencies) of the transmitted RF signal may represent one or more sensed parameters with the acoustic wave device itself functioning as a sensor.

In one of their simpler forms, the transmitted signal from a SAW based device may be switched on and off in a timed sequence, but other methods are possible. Positive aspects of this information transmission methodology include circuit simplification and power savings. For example, instead of requiring the circuitry in the tire to measure the sensed parameters, covert them to digital format, and encode them in a transmitted digital data stream, the sensed parameter information is conveyed through the transmitted RF frequency. Such methodology provides for the transmission of any other information desired, however complex or simple, by amplitude modulation of the transmitted signal. Such a circuit configuration provides for the ability to actively transmit a combination of information from integrated tire electronics to a remote receiver location. The combination of information may correspond to the physical parameters sensed by the acoustic wave device as well as digital data superimposed on the RF signal emitted by the acoustic wave device by selectively switching the amplifier on and off.

Another positive aspect of this type of device is that versatility is afforded to the types of information that can be transmitted via the electronics assemblies. Such information can include sensed information relating to parameters such as temperature and pressure associated with a tire or wheel assembly. Other information may include selected combinations of a unique tag identification, distance traveled, number of tire revolutions, vehicle speed, amounts of tread wear, amounts of tire deflection, the amount of static and/or dynamic forces acting on a tire, etc. So many different types of information are possible in part because a microcontroller can be configured to modulate any type of desired data on the RF output signal(s) from the electronics assembly and the subject calibration methodologies are able to insure reliable interpretation of the transmitted data.

Having recognized the above mentioned positive aspect associated with SAW based devices, the present subject matter recognizes and addresses the fact that there are, never the less, negative aspects associated with SAW based devices that are based on the retransmission of RF energy. Significant among these aspects is the time required to interrogate the SAW based device to obtain an identification (ID) that may be associated with the device as well as multiple blocks of data associated with various calibration constants that may be stored in a memory on the device and that would have to subsequently be transmitted to the data reduction processor.

In accordance with aspects of certain embodiments of the present subject matter, methodologies are provided to insure proper operation of the interrogation systems associated with SAW based devices. More particularly, methodologies have been developed to reduce the time required to obtain calibration constants associated with individual sensors/SAW devices.

In accordance with certain aspects of other embodiments of the present subject matter, methodologies have been developed to centralize certain aspects of calibration related data and to make such data available to local interrogation systems as required.

In accordance with yet additional aspects of further embodiments of the present subject matter, methodologies have been developed to establish a means whereby locally stored calibration data may be updated from a centralized database.

Additional objects and advantages of the present subject matter are set forth in, or will be apparent to, those of ordinary skill in the art from the detailed description herein. Also, it should be further appreciated that modifications and variations to the specifically illustrated, referred and discussed features and elements hereof may be practiced in various embodiments and uses of the invention without departing from the spirit and scope of the subject matter. Variations may include, but are not limited to, substitution of equivalent means, features, or steps for those illustrated, referenced, or discussed, and the functional, operational, or positional reversal of various parts, features, steps, or the like.

Still further, it is to be understood that different embodiments, as well as different presently preferred embodiments, of the present subject matter may include various combinations or configurations of presently disclosed features, steps, or elements, or their equivalents (including combinations of features, parts, or steps or configurations thereof not expressly shown in the figures or stated in the detailed description of such figures). Additional embodiments of the present subject matter, not necessarily expressed in the summarized section, may include and incorporate various combinations of aspects of features, components, or steps referenced in the summarized objects above, and/or other features, components, or steps as otherwise discussed in this application. Those of ordinary skill in the art will better appreciate the features and aspects of such embodiments, and others, upon review of the remainder of the specification.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

Figure 1 diagrammatically illustrates an operational relationship between an interrogator and a SAW based device mounted in a tire according to known practices;

Figure 2 schematically illustrates an exemplary application of the present subject matter to a vehicle tire-monitoring lane in accordance with yet another embodiment of the present subject matter; and

Figure 3 diagrammatically illustrates an exemplary methodology in accordance with the present technology for obtaining SAW device calibration data.

Repeat use of reference characters throughout the present specification and appended drawings is intended to represent same or analogous features or elements of the invention.

### DETAILED DESCRIPTION OF THE PREFERRED EMBODIMENTS

As discussed in the Summary of the Invention section, the present subject matter is particularly concerned with the testing and calibration of interrogators for use with electronics assemblies that monitor and relay various information possibly related to tire identification and/or measurements of selected physical conditions associated with a tire, a wheel assembly, or some other item or area of interest.

Selected combinations of aspects of the disclosed technology correspond to a plurality of different embodiments of the present invention. It should be noted that each of the exemplary embodiments presented and discussed herein should not insinuate limitations of the present subject matter. Features or steps illustrated or described as part of one embodiment may be used in combination with aspects of another embodiment to yield yet further embodiments. Additionally, certain features may be interchanged with similar devices or features not expressly mentioned which perform the same or similar function.

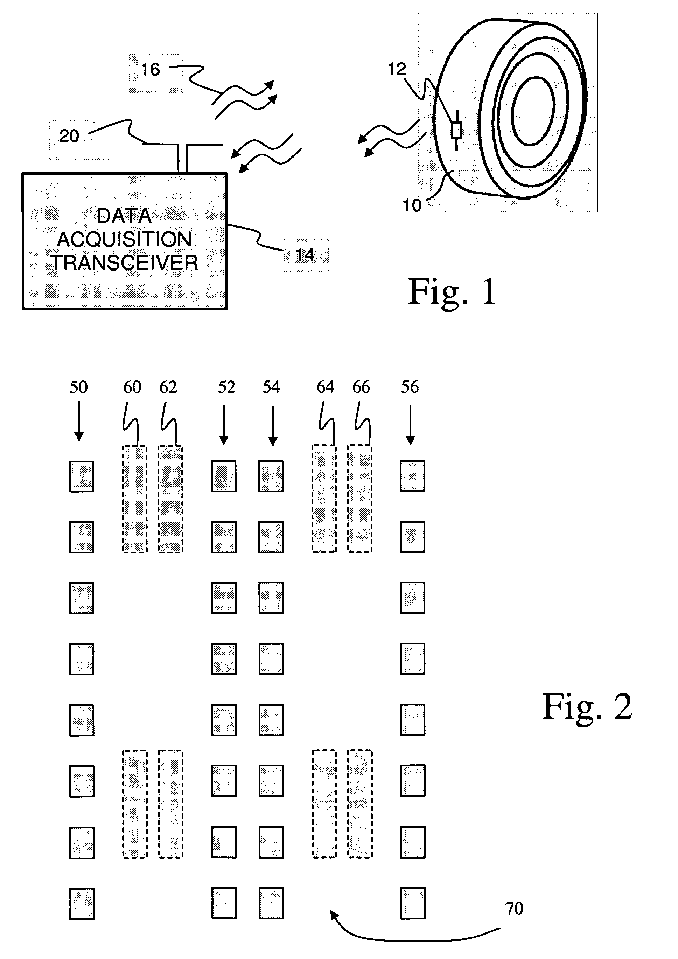

Reference will now be made in detail to the presently preferred embodiments of the subject centralized calibration methodologies. Referring now to the drawings, Figure 1 illustrates aspects of a known tire monitoring system with a passively operating electronics assembly, including a condition-responsive device 12, such as a surface acoustic wave (SAW) sensor to which the present technology may be applied. Tire structure 10 may incorporate a condition-responsive device 12 to monitor various physical parameters such as temperature or pressure within the tire or associated wheel assembly. Such a condition-responsive device may include at least one resonator-type sensor, such as a surface acoustic wave (SAW) resonator or a bulk acoustic wave (BAW) resonator. It should be appreciated in accordance with the present technology that a condition-responsive device can correspond to either of these specific types of sensors or to any commercially available acoustic wave sensor or other type of sensor that has associated therewith calibration constants.

The passively operating assembly with condition-responsive device 12 of Fig. 1 may be energized by a remote source. Thus, a data acquisition transceiver 14 is typically provided with both transmitter and receiver electronics to communicate with the condition-responsive device 12. RF pulses 16 transmitted from the antenna 20 of the transceiver 14 to the electronics assembly in tire 10 excite the SAW device, which may then store some of this energy and transmit a signal back to the transceiver at the end of each energizing RF pulse.

Referring still to Fig. 1, transceiver 14 transmits an interrogation signal 16 that is intended to energize a given condition-responsive device 12 at its frequency of natural oscillation (resonant frequency) such that after an excitation pulse, each resonator element in condition-responsive device 12 radiates energy stored during excitation. Peak levels of this radiated energy occur at the respective resonant frequencies of the resonator elements in the condition-responsive device 12. Such signals are then received at the transceiver 14. By monitoring changes in the frequency of the signal transmitted back from condition-responsive device 12, information corresponding to preselected condition(s) within tire structure 10 can be determined.

In accordance with aspects of the present invention, a condition-responsive device 12 may be provided that relays information in addition to the parameters sensed merely by the condition-responsive device itself. Such information may include, but is not limited to, data relating to the condition responsive device 12 itself as well as data relating to a specific tire with which the condition-responsive device 12 is associated including device identification (ID) data, calibration constant data, manufacturing information, tire information, and other types of data as may be of interest.

Such a condition-responsive device 12 may be associated with a tire structure in a variety of ways. For instance, condition-responsive device 12 may be attached to the interior of a tire structure or some other location relative to a wheel assembly. Alternatively, condition-responsive device 12 may be embedded within a tire structure itself. Still further, condition-responsive device 12 may be encased in an elastomer material with appropriate dielectric properties that may then be adhered to or embedded within a tire structure. The condition-responsive device 12 may also be packaged in any number of ways and may be attached to the wheel assembly, the valve stem, or in any other place which allows for substantially accurate measurement of environmental conditions such as temperature and pressure as associated with the tire.

In accordance with the variety of possible locations for condition-responsive device 12, it will be appreciated in accordance with the present subject matter that a condition-responsive device "integrated" with a tire structure or wheel assembly is intended to encompass all such possible locations and others as within the purview of one of ordinary skill in the art. Moreover, as previously stated, it should be kept in mind that the condition responsive device 12, operating in accordance with the methodologies of the present technology, is not, required to be associated with a tire or tire assembly at all as such condition responsive device may be employed in association with a variety of other device as well as operated as a stand alone device associated only with the environment in which it may be placed.

With further reference to Fig. 1, the present technology recognizes that the process of data transmission from condition responsive device 12 to the data acquisition transceiver 14 requires a significant amount of time. In particular significant amounts of time are required to read the identification (ID) and additional blocks of data associated with the calibration coefficients of the condition responsive device 12. The time constraints presented lead to a situation where if any part of the lengthy interrogation process fails for any reason, the entire interrogation process fails. The present technology addresses this shortcoming by providing a methodology whereby it is necessary to read only the device identification and omit reading of the calibration data that may be maintained within the condition responsive device 12.

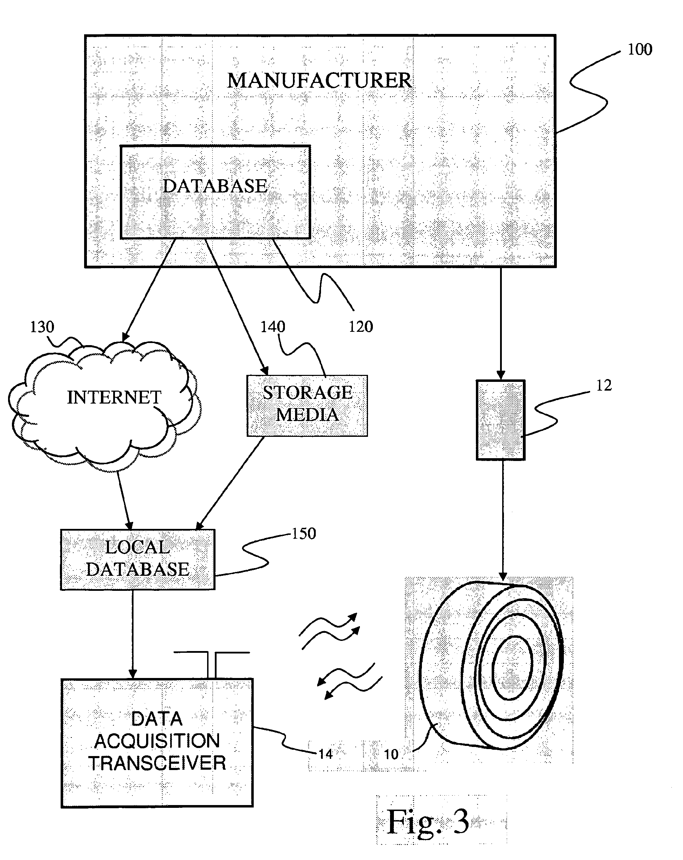

Upon successful reading of the identification data from condition responsive device 12, calibration data for the specific device may be retrieved from a database previously stored in a memory associated with the data acquisition transceiver 14. Given the relatively slow data transmission rate from condition responsive device 12 coupled with the often hostile operating environment of such condition responsive devices, data transfer from a local memory based on a received ID from the condition responsive device 12 is often significantly faster and more reliable that simply receiving calibration data directly from the condition responsive device itself. Such stored data may have been previously recorded in a memory associated with the data acquisition receiver after retrieval from a central database as will be more fully described later with reference to Fig. 3.

With reference now to Figure 2, another exemplary environment with which the methodology of the present technology may be associated will now be described. Illustrated in Figure 5 is an exemplary configuration of a drive-by interrogator. In this exemplary configuration, a plurality of interrogators are arranged in an array of four columns 50, 52, 54, 56, each containing eight interrogators. As should be evident to those of ordinary skill in the art, the exact total number of interrogators included in such an array would depend on the specific use to which the array is placed. In the presently illustrated exemplary configuration, the array of interrogators is configured to permit a multi-wheeled vehicle to pass through a lane 70 with the interrogators positioned in such manner as to allow the tires 60, 62, 64, 66 of such a vehicle to pass between adjacent columns of interrogators. In this manner and under normal operations interrogator in column 50 are positioned to read data from tire 60 while interrogators in column 62 read data from tire 62, interrogators in column 54 from tire 64, and interrogators in column 56 from tire 66.

An important aspect arising from the exemplary embodiment of the present subject matter illustrated in Figure 2 is that the various interrogators of the array are normally placed in fixed relationships to one another and operated concurrently. Simultaneous operation of the plural interrogators could, absent the present technology, lead to serious interference issues. By incorporating the present technology into drive-by readers, the interrogators are required to determine only the identification (ID) data and to associate such data with a wheel position in order to be able to use the combined information as a correlation tag to find the appropriate calibration coefficients from the database.

The association of a local database containing calibration coefficients needed to accurately reduce sensor measurement to an accurate physical value with interrogator systems leads to a requirement that the database be maintained current in order to gain maximum benefit from the present technology. One methodology for maintaining a current database would be to maintain a global database from an external database managed by a global application operated and maintained by, for example, the sensor manufacturer. This database could then be made available for download over, for example, an Intranet, the Internet or some other wide area network, to the local users. Of course other data transport mechanisms including physical media, for example, data compact disks or floppy disk media, could be used to update user data.

To reduce the time necessary for any individual user to access appropriate calibration data, the local interrogation system may maintain records regarding which sensor devices or tires containing such sensor device it has seen previously or owns so that the user may transfer only those calibration data to a smaller database from a larger locally or remotely stored global database which might contain all of the calibration data for all the sensors supplied by one or more manufacturers. To further reduce the time, ID information from 12 can be associated with other data using very efficient data management techniques well known to those skilled in the art, such as b-trees etc. This allows the interrogator to search through a very large number of records very quickly.

The use of a local database in accordance with the present technology significantly reduces the interrogation time and interrogation complexity by significantly reducing the amount of data necessary to be read to obtain accurate sensor measurements. It should be kept in mind that while the present technology has been principally described for use in association with tires, such is not a limitation of the present technology. Rather the present technology may be incorporated in any sensor system where individual calibration coefficients are required and there may be occasion to remotely interrogate the sensor. Moreover the present technology provides the opportunity to optionally delete calibration coefficient data from the device itself and thereby provide additional measured data storage without an increase in sensor memory capacity.

With reference to Fig. 3, a diagrammatically illustrated exemplary of the methodology in accordance with the present technology for obtaining SAW device calibration data is presented. As shown, a manufacturer 100 may produce sensor 12 which may be configured for association with a tire 10. During the manufacturing process, manufacturer 100 undertakes a testing process to obtain calibration coefficients for each sensor 12 produced. Data obtained from this process is stored in a database 120. Although the database 120 is illustrated as associated with the manufacturer 100, the database may be transferred to and maintained by a separate entity, for example, a clearinghouse that may collect data from a number of manufacturers for later distribution to users of the manufactured sensors.

Further with respect to Fig. 3, at least a portion of the data maintained in database 120 may be transmitted to a local database 150 by way of the Internet 130 or through the intermediary of a physical storage medium 140. Alternatively, of course, other methods of data transmission may be employed including both electronic and manual entry methods. Finally at least a portion of the data transmitted to local database 150 may be transmitted to data acquisition transceiver 14 or some other testing equipment so that calibration data for an identified sensor device 12 may be provided to the data acquisition transceiver and/or other associated testing equipment.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A method for retrieving calibration data for a sensor device integrated with a tire or tire assembly, comprising the steps of:
- providing a sensor device in a tire or tire assembly, comprising at least a portion that is responsive to a selected physical condition of the tire, a transmitter portion, a receiver portion, and a memory portion;
- storing at least tire identification data corresponding to the sensor device in the memory portion;
- storing sensor related calibration data associated with the identification data in a database remote from the sensor device;
- interrogating the sensor device with an interrogator device to obtain the identification data; and
retrieving calibration data from the database based on the identification data obtained from the step of interrogating.

2. The method of claim 1, further comprising the step of:
- transmitting at least a portion of the sensor related calibration data stored in the remote database to a local database associated with the interrogating device,
wherein the step of retrieving comprises retrieving calibration data from the local database based on the tire identification data obtained from the step of interrogating.

3. The method of claim 2, wherein the step of transmitting comprises transmitting at least a portion of the sensor related calibration data over a wide area network.

4. The method of claim 3, wherein the step of transmitting comprises transmitting at least a portion of the sensor related calibration data over the Internet.

5. The method of claim 2, wherein the step of transmitting comprises transmitting at least a portion of the sensor related calibration data to a local database by way of a data storage media.

## Patentansprüche

1. Verfahren zum Abrufen von Kalibrierungsdaten für eine mit einem Reifen oder einer Reifenbaugruppe integrierte Sensoreinrichtung, umfassend die folgenden Schritte:
- Bereitstellen einer Sensoreinrichtung in einem Reifen oder einer Reifenbaugruppe, umfassend mindestens einen Abschnitt, der auf einen ausgewählten physischen Zustand des Reifens reagiert, einen Senderabschnitt, einen Empfängerabschnitt und einen Speicherabschnitt;
- Speichern mindestens von Reifenidentifikationsdaten entsprechend der Sensoreinrichtung in dem Speicherabschnitt;
- Speichern sensorbezogener Kalibrierungsdaten, mit den Identifikationsdaten assoziiert, in einer von der Sensoreinrichtung entfernten Datenbank;
- Abfragen der Sensoreinrichtung mit einer Interrogator-Einrichtung, um die Identifikationsdaten zu erhalten; und
Abrufen von Kalibrierungsdaten aus der Datenbank auf der Basis der aus dem Schritt des Abfragens erhaltenen Identifikationsdaten.

2. Verfahren nach Anspruch 1, weiterhin umfassend den folgenden Schritt:
- Übertragen mindestens eines Teils der sensorbezogenen, in der entfernten Datenbank gespeicherten Kalibrierungsdaten an eine mit der Abfrageeinrichtung assoziierte lokale Datenbank,
wobei der Schritt des Abrufens das Abrufen von Kalibrierungsdaten von der lokalen Datenbank auf der Basis der von dem Schritt des Abfragens erhaltenen Reifenidentifikationsdaten umfaßt.

3. Verfahren nach Anspruch 2, wobei der Schritt des Übertragens das Übertragen mindestens eines Teils der sensorbezogenen Kalibrierungsdaten über ein Weitbereichsnetz umfaßt.

4. Verfahren nach Anspruch 3, wobei der Schritt des Übertragens das Übertragen mindestens eines Teils der sensorbezogenen Kalibrierungsdaten über das Internet umfaßt.

5. Verfahren nach Anspruch 2, wobei der Schritt des Übertragens das Übertragen mindestens eines Teils der sensorbezogenen Kalibrierungsdaten zu einer lokalen Datenbank über ein Datenspeicherungsmedium umfaßt.

## Revendications

1. Procédé permettant de récupérer des données d'étalonnage pour un dispositif de détection intégré dans un pneu ou un assemblage de pneu, comprenant les étapes suivantes :
- le placement d'un dispositif de détection dans un pneu ou un assemblage de pneu, comprenant au moins une partie qui est sensible à un état physique déterminé du pneu, une partie de transmission, une partie de réception et une partie de mémoire ;
- le stockage d'au moins des données d'identification de pneu correspondant au dispositif de détection dans la partie de mémoire ;
- le stockage de données d'étalonnage se rapportant au détecteur associées aux données d'identification dans une base de données distante du dispositif de détection ;
- l'interrogation du dispositif de détection avec un dispositif d'interrogation pour obtenir les données d'identification, et
- l'extraction de données d'étalonnage de la base de données sur la base des données d'identification obtenues de l'étape d'interrogation.

2. Procédé suivant la revendication 1, comprenant en outre l'étape suivante :
- la transmission d'une partie au moins des données d'étalonnage se rapportant au détecteur stockées dans la base de données distante à une base de données locale associée au dispositif d'interrogation ;
dans lequel l'étape de récupération comprend l'extraction de données d'étalonnage de la base de données locale sur la base des données d'identification de pneu obtenues de l'étape d'interrogation.

3. Procédé suivant la revendication 2, dans lequel l'étape de transmission comprend la transmission d'une partie au moins des données d'étalonnage se rapportant au détecteur par un réseau étendu.

4. Procédé suivant la revendication 3, dans lequel l'étape de transmission comprend la transmission d'une partie au moins des données d'étalonnage se rapportant au détecteur par l'Internet.

5. Procédé suivant la revendication 2, dans lequel l'étape de transmission comprend la transmission d'une partie au moins des données d'étalonnage se rapportant au détecteur vers une base de données locale au moyen d'un support de mémorisation de données.
